# NOUVEAU FASCICULE DE BREVET EUROPEEN

(11) **EP 0 968 643 B3**
(45) Date de publication du présent fascicule: **14.08.2013**
(45) Mention de la délivrance du brevet: 04.10.2001
(21) Numéro de dépôt: 99440172.7
(22) Date de dépôt: 01.07.1999
(51) Int. Cl.: A01F 29/14

(54) **Machine de distribution**
Verteilmaschine
Distributing machine

(30) Priorité: 03.07.1998 FR 9808645
(43) Date de publication de la demande: 05.01.2000
(73) Titulaire: Kuhn-Audureau S.A., 85260 La Copechagnière (FR)
(72) Inventeur: Rostoucher, Guy, 85170 Belleville Sur Vie (FR); Guerry, Serge, 85500 Les Herbiers (FR)
(74) Mandataire: Esch, Esther Evelyne

(56) Documents cités:
- DE-B- 1 232 391
- FR-A- 1 072 833
- FR-A- 2 349 172
- FR-A- 2 627 946
- FR-A- 2 735 652
- FR-A- 2 760 317
- GB-A- 2 135 177
- SU-A- 1 653 597
- US-A- 3 208 491
- US-A- 3 999 674
- US-A- 5 215 266

## Description

La présente invention se rapporte à une machine selon le préambule de la revendication 1.

Un tel dispositif est connu par le document FR-A-2735652.

La benne peut recevoir des produits tels que du fourrage ou de la paille en vrac ou sous forme de balles. Durant le travail, ces produits sont démêlés et déchiquetés par le tambour démêleur. Ils passent ensuite au ventilateur qui les éjecte soit dans des auges s'il s'agit de fourrage, soit les répartit sur le sol lorsqu'il s'agit de paille destinée à constituer une litière pour le bétail.

Sur une machine connue de ce genre, les moyens d'entraînement, notamment ceux qui assurent l'entraînement en rotation du ou des tambours démêleurs, ne permettent pas une parfaite adaptation de cet entraînement aux différentes conditions de travail imposées par la nature des produits à distribuer.

La présente invention a pour but d'améliorer le fonctionnement de machines du type de celle citée dans l'introduction. Ce but est atteint par une machine selon la revendication 1.

Cet agencement permet à l'utilisateur de commander très facilement la mise en rotation ou l'arrêt du tambour démêleur. Au début du travail, il est ainsi possible d'entraîner en premier le ventilateur, de sorte qu'il atteigne la bonne vitesse de rotation et de n'entraîner le ou les tambours démêleurs que dans un deuxième temps au moyen de l'embrayage.

Par ailleurs, lorsqu'il y a un excès de charge sur le ou les tambours démêleurs, dû à la nature du produit, il peut se produire un glissement de la courroie sur la poulie. Les moyens d'entraînement ne subissent alors aucun dommage.

Selon d'autres caractéristiques de l'invention, la position du tendeur peut être réglée au moyen d'un vérin hydraulique. Une tige d'actionnement munie d'un ressort de pression fait que le tendeur exerce une pression constante sur la courroie et peut rattraper l'allongement dû à l'usure de cette courroie. Cette pression est avantageusement réglable.

Selon une autre caractéristique de l'invention, la machine comporte un dispositif d'arrêt de l'entraînement du tapis de déplacement des produits dans la benne, lequel dispositif d'arrêt se situe dans la zone de déplacement du dispositif d'embrayage. Ce dernier actionne le dispositif d'arrêt de sorte que le tapis d'alimentation soit automatiquement arrêté lorsque la courroie d'entraînement est détendue et que la rotation du tambour démêleur est arrêtée. Les produits qui se situent dans la benne ne sont alors plus poussés vers le ou les tambours démêleurs. Cela évite une accumulation de produits qui pourrait provoquer un blocage dudit ou desdits tambours démêleurs lors de la reprise.

D'autres caractéristiques et avantages de l'invention ressortiront des revendications et de la description ci-après d'un exemple de réalisation non limitatif de l'invention, avec référence aux dessins annexés dans lesquels :
- La figure 1 représente une vue de côté avec une coupe partielle d'une machine selon l'invention.
- La figure 2 représente une vue de détail d'une partie des moyens de transmission.
- La figure 3 représente une vue de détail du dispositif d'embrayage en position de travail.
- La figure 4 représente une vue de détail du dispositif d'embrayage en position de repos.

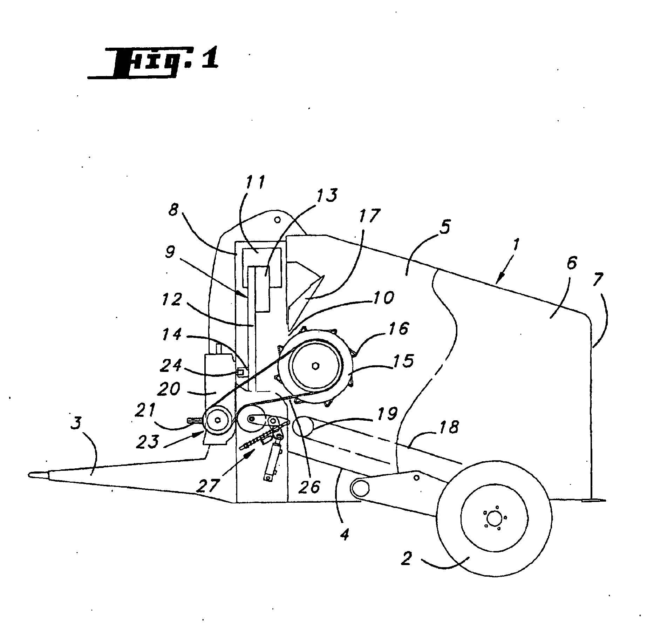

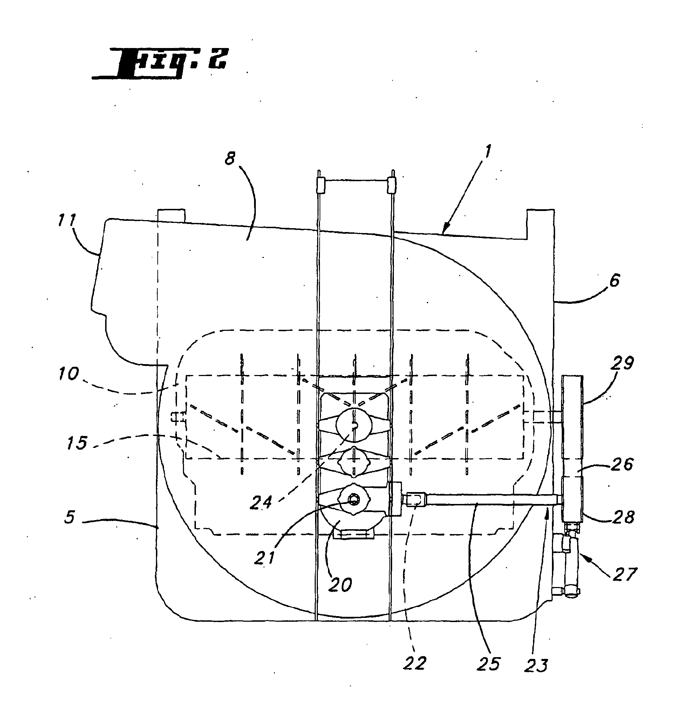

Telle qu'elle est représentée sur les figures 1 et 2, la machine selon l'invention comporte une benne (1) avec deux roues porteuses (2) et un timon (3) pour l'accrochage à un tracteur servant à animer la machine et à la déplacer. La benne (1) est avantageusement déplaçable en hauteur par rapport aux roues (2). Cela permet de l'abaisser jusqu'au sol lors de son chargement et de la soulever pour les déplacements.

Ladite benne (1) possède un fond (4) et deux parois latérales (5 et 6). Le côté arrière (7) permet le chargement des produits dans la benne (1). Il peut être fermé au moyen d'un panneau qui estfixé à un bras non représenté. Ce bras peut être articulé sur la benne (1) de manière à permettre de déplacer ledit panneau. Le côté avant de la benne (1) est constitué par un carter (8) dans lequel est logé un ventilateur (9). Ce carter (8) possède une ouverture (10) sur le côté orienté vers l'intérieur de la benne (1) et une sortie latérale (11).

Le ventilateur (9) est notamment constitué par un disque (12) muni de pales (13) et éventuellement de couteaux. Ce disque (12) est fixé sur un arbre (14) sensiblement horizontal qui permet de l'entraîner en rotation.

Devant l'ouverture (10) du carter (8) est disposé un tambour démêleur (15). Celui-ci se situe ainsi entre les produits chargés dans la benne (1) et le ventilateur (9). Il s'étend entre les parois latérales (5 et 6) de la benne (1). Ses extrémités sont guidées dans des paliers desdites parois latérales (5 et 6) de manière à ce qu'il puisse tourner autour de son axe longitudinal. Ce tambour (15) est équipé de couteaux (16) ou d'organes similaires pour couper et démêler les produits. Ces couteaux (16) coopèrent avec des contre-couteaux (17) fixés sur le carter (8).

Un ou deux tambours démêleurs supplémentaires peuvent être disposés parallèlement au tambour (15) pourtravaillersur une hauteur plus importante. Ces tambours démêleurs supplémentaires peuvent être entraînés en rotation à partir du tambour (15) précité par exemple au moyen de courroies ou de chaînes.

Sur le fond (4) de la benne (1) est disposé un tapis (18) de déplacement des produits. Ce tapis (18) est constitué par une bande transporteuse qui passe sur des rouleaux (19) situés près des extrémités avant et arrière de la benne (1). Un de ces rouleaux (19) est entraîné en rotation de sorte qu'il anime le tapis (18) et lui fait amener les produits contenus dans la benne (1) au tambour démêleur (15). Cet entraînement d'un des rouleaux (19) est réalisé au moyen d'un moteur hydraulique qui est relié au circuit hydraulique du tracteur par l'intermédiaire de tuyaux.

A l'avant du carter (8) est disposé un boîtier de distribution (20). Celui-ci comporte une entrée (21) qui peut être reliée à l'arbre de prise de force d'un tracteur à l'aide d'un arbre intermédiaire. Il comporte une première sortie (22) à laquelle sont reliés des moyens de transmission (23) pour entraîner le tambour démêleur (15) et une deuxième sortie (24) qui entraîne le ventilateur (9).

Les moyens de transmission (23) précités comprennent un arbre d'entraînement (25) et au moins une courroie de transmission (26) à laquelle est associé un dispositif d'embrayage (27). L'arbre d'entraînement (25) s'étend de la première sortie (22) jusqu'à la paroi latérale (6) de la benne (1). Il porte à son extrémité dépassant ladite paroi latérale (6) une poulie (28) pour la courroie de transmission (26) qui passe sur une deuxième poulie (29) qui est liée au tambour démêleur (15). Dans l'exemple représenté, la courroie (26) est trapézoïdale.

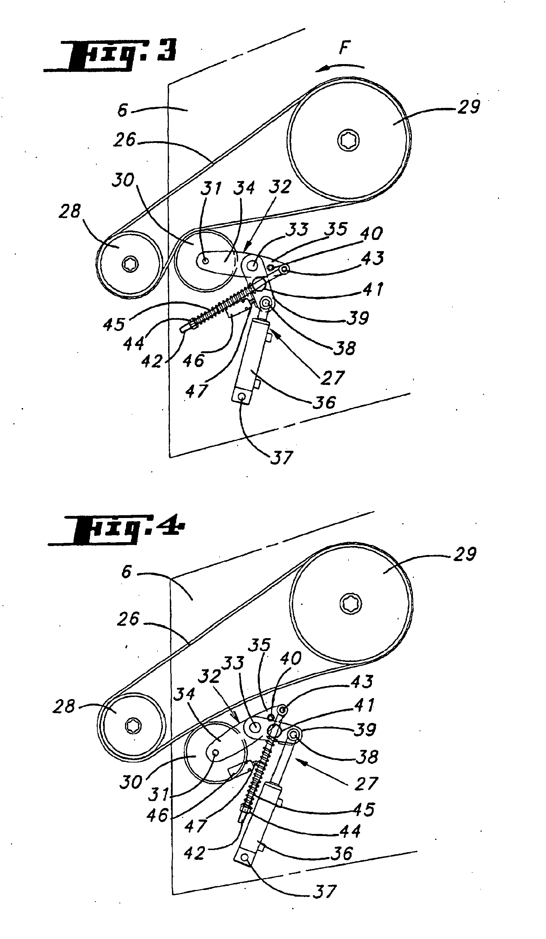

Comme cela ressort notamment des figures 3 et 4, le dispositif d'embrayage (27) agit sur un ou plusieurs brins de la courroie (26). Il se compose d'un tendeur (30) qui est monté sur un axe de rotation (31) disposé sur un balancier (32) articulé sur un pivot (33) qui est solidaire de la paroi latérale (6) de la benne (1) ou d'un support rapporté sur ladite paroi (6). Ce balancier (32) se compose de deux parties (34 et 35) qui s'étendent sur des côtés opposés par rapport au pivot (33). La position dudit tendeur (30) par rapport à la courroie (26) peut être réglée au moyen d'un vérin hydraulique ou électrique (36) commandé depuis le tracteur. Dans l'exemple représenté, le vérin hydraulique (36) est, d'une part, monté sur un pivot (37) solidaire de la paroi latérale (6) et, d'autre part, articulé au moyen d'un axe (38) sur un levier (39) qui est lui-même articulé sur le pivot (33) du balancier (32). Ce dernier comporte une butée (40) pour le levier (39). Cette butée (40) est placée sur la partie (35) du balancier (32) qui, par rapport au pivot (33), s'étend à l'opposé de la partie (34) qui porte le tendeur (30). La distance de la butée (40) par rapport au pivot (33) est relativement faible de sorte qu'elle se situe dans le secteur de pivotement du levier (39) autour dudit pivot (33).

Le levier (39) porte entre le pivot (33) et l'axe d'articulation (38) du vérin hydraulique (36) une bague oscillante (41) à travers laquelle s'étend une tige d'actionnement (42). Une des extrémités de cette tige (42) est articulée sur le balancier (32) au moyen d'un axe (43) situé sur la partie (35) opposée à celle qui porte le tendeur (30). La deuxième extrémité de la tige d'actionnement (42) comporte un écrou d'arrêt (44). Entre l'écrou d'arrêt (44) et la bague oscillante (41) est disposé un ressort de pression (45). Ce ressort exerce constamment une poussée sur l'écrou d'arrêt (44) de la tige (42), de sorte que cette dernière tire sur le balancier (32) et le fait tourner autour du pivot (33) dans le sens des aiguilles d'une montre. L'écrou (44) peut être déplacé pour modifier la poussée du ressort (45).

La paroi latérale (6) de la benne (1) peut en sus porter un dispositif d'arrêt (46) hydraulique ou électrique de l'entraînement du tapis (18) qui déplace les produits dans la benne (1). Ce dispositif (46) se situe dans la zone de déplacement du levier (39) autour du pivot (33). Il comporte un poussoir (47) qui est actionné par ledit levier (39). Ce poussoir (47) coupe automatiquement l'entraînement du tapis (18) lorsqu'il est relâché et que la courroie (26) est détendue (figure 4). Il rétablit ledit entraînement dès qu'il est actionné par le levier (39) lorsque celui-ci est déplacé pour tendre la courroie (26).

Au travail, la benne (1) peut être chargée de fourrage ou de paille en vrac ou sous forme de balles ou même de blocs. Ensuite la machine est amenée sur le lieu de distribution au moyen du tracteur. L'entrée (21) du boîtier de distribution (20) peut alors être mise en rotation à partir de l'arbre de prise de force du tracteur. La première et la deuxième sorties (22 et 24) dudit boîtier (20) sont alors entraînées en rotation. La deuxième sortie (24) transmet le mouvement au ventilateur (9) de sorte qu'il tourne sur son arbre (14). L'arbre (25) est entraîné en rotation par la première sortie (22) sans que dans un premier temps le mouvement ne soit transmis au tambour démêleur (15) par la courroie (26) qui est détendue.

Dès que la vitesse de rotation normale du ventilateur (9) est atteinte, l'utilisateur commande le dispositif d'embrayage (27) de manière à faire tourner le tambour démêleur (15). Pour cela, il actionne le vérin hydraulique (36) afin qu'il se rétracte. Celui-ci tire sur le levier (39) et le fait tourner autour du pivot (33). Ledit levier (39) comprime le ressort (45) par l'intermédiaire de la bague oscillante (41). Ce ressort (45) exerce une pression sur la tige d'actionnement (42) qui tire sur le balancier (32) et le fait tourner autour du pivot (33), de sorte que le tendeur (30) soit pressé contre la courroie (26). Cette dernière est alors tendue et entraîne la poulie (29) qui est solidaire du tambour démêleur (15), par exemple dans le sens de la flèche (F). La mise en rotation de ce tambour (15) s'effectue d'une manière progressive. La position décrite ci-dessus est représentée sur la figure 3.

Ledit tambour (15) démêle ainsi les produits contenus dans la benne (1) et les fait passer, en un flux relativement régulier, au ventilateur (9). Dans cette position du dispositif d'embrayage (27), le levier (39) presse sur le poussoir (47) du dispositif d'arrêt (46) de sorte que le tapis (18) soit entraîné. Le côté de ce tapis (18) qui est en contact avec les produits se déplace alors en direction du tambour démêleur (15) et lui amène lesdits produits.

Lorsqu'un paquet de fourrage particulièrement compact provoque une surcharge au niveau du tambour démêleur (15), la courroie (26) peut glisser sur la poulie (29). De ce fait, l'arbre de transmission (25) et le boîtier (20) ne sont pas soumis à des excès de charge qui pourraient occasionner des ruptures.

Les produits qui parviennent au ventilateur (9) sont éjectés latéralement par ses pales (13). Ils peuvent alors être dirigés vers une auge lorsqu'il s'agit de fourrage ou vers la litière lorsqu'il s'agit de paille.

Durant le travail, la position du levier (39) par rapport à la butée (40) du balancier (32) permet de contrôler l'allongement de la courroie (26). Lorsque ladite butée (40) rencontre le levier (39) par suite de la pression exercée par le ressort (45) sur la tige d'actionnement (42), la courroie (26) est trop allongée. Dans ce cas il y a lieu de la remplacer afin que le dispositif fonctionne à nouveau correctement.

Pour arrêter l'entraînement du tambour démêleur (15), il suffit de détendre la courroie (26) comme cela est représenté sur la figure 4. Pour cela, le vérin hydraulique (36) est actionné afin qu'il s'allonge. Le levier (39) tourne alors sur le pivot (33) et relâche le ressort (45). En sus, il rencontre la butée (40) et entraîne le balancier (32) autour du pivot (33). Celui-ci ramène le tendeur (30) dans une position où il n'a pratiquement plus d'influence sur la courroie (26). Cette dernière n'entraîne alors plus la poulie (29) du tambour démêleur (15). De plus, durant le déplacement du levier (39) celui-ci libère le poussoir (47) du dispositif d'arrêt (46). L'entraînement du tapis de déplacement (18) dans la benne (1) est alors automatiquement stoppé.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques dans les limites du cadre défini dans les revendications.

## Revendications

1. Machine de distribution de produits alimentaires ou autres pour le bétail, comportant au moins une benne (1) pour transporter les produits, laquelle possède deux parois latérales (5 et 6), un fond (4) sur lequel est disposé un tapis (18) de déplacement des produits, et un carter (8) constituant le côté avant de ladite benne (1) et possédant une ouverture (10) sur le côté orienté vers l'intérieur de la benne (1), ainsi qu'une sortie latérale (11), un ventilateur d'éjection (9) situé à une extrémité de la benne (1), logé dans ledit carter (8), et étant notamment constitué par un disque (12) fixé sur un arbre (14) sensiblement horizontal qui permet de l'entraîner en rotation, et au moins un tambour démêleur (15) situé entre les produits chargés dans la benne (1) et le ventilateur d'éjection (9), et auquel tambour démêleur (15) le tapis (18) animé amène les produits contenus dans la benne (1), les extrémités dudit tambour démêleur (15) étant guidées dans des paliers desdites parois latérales (5 et 6) de la benne (1) de sorte que le tambour démêleur (15) puisse tourner autour de son axe longitudinal, lesquels ventilateur d'éjection (9) et tambour démêleur (15) sont entraînés en rotation durant le travail à partir d'un boîtier de distribution (20) disposé à l'avant du carter (8) et comportant au moins une première sortie (22) à laquelle sont reliés des moyens de transmission (23) pour entraîner ledit tambour démêleur (15), et une deuxième sortie (24) qui entraîne le ventilateur d'éjection (9), ***caractérisée* par le fait que** lesdits moyens de transmission (23) comprennent au moins une courroie de transmission (26), un arbre d'entraînement (25) qui s'étend de ladite première sortie (22) jusqu'à la paroi latérale (6) de la benne (1) et qui porte à son extrémité dépassant ladite paroi latérale (6) une poulie (28) pour la courroie de transmission (26) qui passe sur une deuxième poulie (29) qui est liée audit tambour démêleur (15), et qu'à ladite courroie de transmission (26) est associé un dispositif d'embrayage (27) se composant d'un tendeur (30) dont la position par rapport à la courroie de transmission (26) est réglée par un vérin (36).

2. Machine selon la revendication 1 ***caractérisée* par le fait que** le dispositif d'embrayage (27) se compose du tendeur (30) qui est monté sur un axe de rotation (31) disposé sur un balancier (32) articulé sur un pivot (33) qui est solidaire de la paroi latérale (6) de la benne (1).

3. Machine selon la revendication 2, ***caractérisée* par le fait que** le vérin hydraulique (36) est articulé au moyen d'un axe (38) sur un levier (39) qui est lui-même articulé sur le pivot (33).

4. Machine selon la revendication 3, ***caractérisée* par le fait que** le levier (39) porte une bague oscillante (41) à travers laquelle s'étend une tige d'actionnement (42) dont une extrémité est articulée sur le balancier (32) au moyen d'un axe (43).

5. Machine selon la revendication 4, ***caractérisée* par le fait que** la deuxième extrémité de la tige d'actionnement (42) comporte un écrou d'arrêt (44) et qu'entre cet écrou d'arrêt (44) et la bague oscillante (41) est disposé un ressort de pression (45) qui exerce constamment une poussée sur la tige d'actionnement (42).

6. Machine selon la revendication 4, *caractérlsée* par le fait que la bague oscillante (41) se situe sur le levier (39) entre le pivot (33) et l'axe d'articulation (38) du vérin hydraulique (36) sur ledit levier (39).

7. Machine selon la revendication 4, ***caractérisée* par le fait que** le balancier (32) se compose de deux parties (34 et 35) qui s'étendent sur des côtés opposés par rapport au pivot (33) et que l'axe d'articulation (43) de la tige d'actionnement (42) se situe sur la partie (35) alors que l'axe d'articulation (31) du tendeur (30) se situe sur la partie (34) opposée.

8. Machine selon l'une quelconque des revendications 2 à 7*,* ***caractérisée par* le fait que** le balancier (32) comporte une butée (40) pour le levier (39).

9. Machine selon la revendication 8, ***caractérisée* par le fait que** la butée (40) est placée sur la partie (35) du balancier (32) qui, par rapport au pivot (33), est opposée à celle qui porte le tendeur (30).

10. Machine selon l'une quelconque des revendications précédentes, ***caractérisée* par le fait qu'**elle comporte au moins un tambour démêleur supplémentaire qui est parallèle au tambour démêleur (15) et qui est entraîné en rotation à partir de celui-ci.

11. Machine selon l'une quelconque des revendications précédentes, ***caractérisée* par le fait qu'**elle comporte un dispositif d'arrêt (46) de l'entraînement du tapis (18) de déplacement des produits dans la benne (1), lequel dispositif d'arrêt (46) se situe dans la zone de déplacement du levier (39) autour du pivot (33).

12. Machine selon la revendication 11, ***caractérisée* par le fait que** le dispositif d'arrêt (46) comporte un poussoir (47) qui est actionné par le levier (39).

## Patentansprüche

1. Maschine zur Verteilung von Nahrungsmitteln oder anderen Gütern für Vieh, mit mindestens einem Wagen (1) zum Transport der Güter, der zwei Seitenwände (5 und 6), einen Boden (4) auf welchem ein Band (18) zur Bewegung der Güter angebracht ist und einen Kasten (8) aufweist, wobei letzterer die vordere Seite des Wagens (1) bildet und eine sich auf der zum Inneren des Wagens (1) weisenden Seite befindenden Öffnung (10) enthält, sowie einen Seitenausgang (11), ein sich an einem Ende des Wagens (1) erstreckendes, in dem Kasten (8) untergebrachtes Gebläse (9), das insbesondere aus einer Scheibe (12) besteht, die an einer im wesentlichen horizontalen Welle (14) befestigt ist, die es gestattet, sie in Drehung zu versetzen, und mindestens eine sich zwischen den in den Wagen (1) geladenen Gütern und dem Gebläse (9) angeordnete Auflockertrommel (15), und zu welcher Auflockertrommel (15) das angetriebene Band (18) die in dem Wagen (1) enthaltenen Gütern bringt, wobei die Enden der Auflockertrommel (15) in Lager der Seitenwände (5 und 6) des Wagens (1) derart geführt sind, dass die Auflockertrommel (15) um ihre Längsachse drehen kann, wobei das Gebläse (9) und die Auflockertrommel (15) während der Arbeit von einem Verteilungsgehäuse (20) aus in Drehung versetzt werden, das am Vorderteil des Kastens (8) angebracht ist und mindestens einen ersten Ausgang (22), mit welchem Kraftübertragungsmittel (23) zum Antrieb der Auflockertrommel (15) verbunden sind und einen zweiten Ausgang (24) zum Antrieb des Gebläses (9), aufweist ***dadurch gekennzeichnet,* dass** die Kraftübertragungsmittel (23) mindestens einen Treibriemen (26), eine Antriebswelle (25), die sich vom ersten Ausgang (22) bis zur Seitenwand (6) des Wagens (1) erstreckt und an ihrem über die Seitenwand (6) hinwegragenden Ende mit einer Riemenscheibe (28) für den Treibriemen (26) versehen ist, der über eine zweite Riemenscheibe (29) läuft, die mit der Auflockertrommel (15) verbunden ist, umfassen und, dass mit dem Treibriemen (26) eine Kupplungsvorrichtung (27) verbunden ist, die eine Spannvorrichtung (30) aufweist, deren Stellung bezüglich des Treibriemens (26) mittels eines Hydraulikzylinders eingestellt wird.

2. Maschine nach Anspruch 1, ***dadurch gekennzeichnet,* dass** die Kupplungsvorrichtung (27) aus der Spannvorrichtung (30) besteht, die auf einer Drehachse (31) angebracht ist, welche an einer an einem fest mit der Seitenwand (6) des Wagens (1) verbundenen Drehzapfen (33) angelenkten Schwinge (32) angeordnet ist.

3. Maschine nach Anspruch 2, ***dadurch gekennzeichnet,* dass** der Hydraulikzylinder (36) mittels einer Achse (38) an einem Hebel (39) angelenkt ist, der seinerseits an dem Drehzapfen (33) angelenkt ist.

4. Maschine nach Anspruch 3, ***dadurch gekennzeichnet,* dass** der Hebel (39) mit einem schwenkbaren Ring (41) versehen ist, durch den sich eine Betätigungsstange (42) erstreckt, deren eines Ende mittels einer Achse (43) an der Schwinge (32) angelenkt ist.

5. Maschine nach Anspruch 4, ***dadurch gekennzeichnet,* dass** das zweite Ende der Betätigungsstange (42) eine Anschlagmutter (44) aufweist und dass zwischen dieser Anschlagmutter (44) und dem schwenkbaren Ring (41) eine Druckfeder (45) angeordnet ist, die auf die Betätigungsstange (42) fortwährend eine Druckkraft ausübt.

6. Maschine nach Anspruch 4, ***dadurch gekennzeichnet,* dass** sich der schwenkbare Ring (41) am Hebel (39) zwischen dem Drehzapfen (33) und der Gelenkachse (38) des Hydraulikzylinders (36) am Hebel (39) befindet.

7. Maschine nach Anspruch 4, ***dadurch gekennzeichnet,* dass** die Schwinge (32) aus zwei Teilen (34 und 35) besteht, die sich auf einander gegenüberliegenden Seiten bezüglich des Drehzapfens (33) erstrecken, und dass sich die Gelenkachse (43) der Betätigungsstange (42) am Teil (35) befindet, während sich die Gelenkachse (31) der Spannvorrichtung (30) am gegenüberliegenden Teil (34) befindet.

8. Maschine nach irgend einem der Ansprüche 2 bis 7, ***dadurch gekennzeichnet,* dass** die Schwinge (32) einen Anschlag (40) für den Hebel (39) aufweist.

9. Maschine nach Anspruch 8, ***dadurch gekennzeichnet,* dass** der Anschlag (40) an dem Teil (35) der Schwinge (32) angeordnet ist, der bezüglich des Drehzapfens (33) dem Teil, der die Spannvorrichtung (30) trägt, gegenüberliegt.

10. Maschine nach irgend einem der vorhergehenden Ansprüche, ***dadurch gekennzeichnet,* dass** sie mindestens eine zusätzliche Auflockertrommel enthält, die parallel zur Auflockertrommel (15) liegt und von dieser aus drehangetrieben wird.

11. Maschine nach irgend einem der vorhergehenden Ansprüche, ***dadurch gekennzeichnet,* dass** sie eine Vorrichtung (46) zum Anhalten des Antriebs des Bandes (18) zur Bewegung der Güter im Wagen (1) enthält, wobei sich die Anhaltevornchtung (46) im Bewegungsbereich des Hebels (39) um den Drehzapfen (33) befindet.

12. Maschine nach Anspruch 11, ***dadurch gekennzeichnet,* dass** die Anhaltevorrichtung (46) einen Schieber (47) enthält, der durch den Hebel (39) betätigt wird.

## Claims

1. Machine for distributing foodstuffs or other products for cattle, comprising at least one bucket (1) for transporting the products, which has two side walls (5 and 6), a bottom (4) on which is arranged a product conveying band (18) and a casing (8) constituting the front side of the said bucket (1) and having an opening (10) on the side directed towards the inside of the bucket (1), as well as a side outlet (11), an ejection blower (9) located at one end of the bucket (1), housed in the said casing (8) and being in particular constituted by a disc (12) fastened on a substantially horizontal shaft (14) which makes it possible to drive it in rotation, and at least one unravelling drum (15) located between the products loaded into the bucket (1) and the ejection blower (9), and to which unravelling drum (15) the product conveying band (18) brings the products contained in the bucket (1), the ends of the said unravelling drum (15) being guided in bearings of the said side walls (5 and 6) of the bucket (1) so that the unravelling drum (15) may rotate about its longitudinal axis, which ejection blower (9) and unravelling drum (15) are rotationally driven during work off a distribution gearbox (20) arranged at the front of the casing (8) and comprising at least one output (22) to which transmission means (23) are connected to drive the said unravelling drum (15), and a second output (24) which drives the ejection blower (9), ***characterized in* that** the said transmission means (23) comprise at least one transmission belt (26), a drive shaft (25) which extends from the first output (22) to the side wall (6) of the bucket (1) and which carries at its end protruding beyond the said side wall (6) a pulley (28) for the transmission belt (26) which passes over a second pulley (29) which is connected to the said unravelling drum (15), and that with the said transmission belt (26) is associated a clutch device (27) comprising a tensioner (30), the position of which with respect to the transmission belt (26) is adjusted by means of a ram (36).

2. Machine according to Claim 1, ***characterized in* that** the clutch device (27) is made up of the tensioner (30) which is mounted on an axis of rotation (31) located on a rocker arm (32) articulated on a pivot (33) which is secured to the side wall (6) of the bucket (1).

3. Machine according to Claim 2, ***characterized in* that** the hydraulic ram (36) is articulated by means of an axis (38) on a lever (39) which is itself articulated on the pivot (33).

4. Machine according to Claim 3, ***characterized in* that** the lever (39) carries an oscillating ring (41) through which there extends an actuating rod (42), one end of which is articulated to the rocker arm (32) by means of an axis (43).

5. Machine according to Claim 4, ***characterized in* that** the second end of the actuating rod (42) has a stop nut (44) and that between this stop nut (44) and the oscillating ring (41) there is a pressing spring (45) which constantly exerts thrust on the actuating rod (42).

6. Machine according to Claim 4, ***characterized in* that** the oscillating ring (41) is located on the lever (39) between the pivot (33) and the axis of articulation (38) of the hydraulic ram (36) to the said lever (39).

7. Machine according to Claim 4, ***characterized in* that** the rocker arm (32) is made up of two parts (34 and 35) which extend on opposite sides with respect to the pivot (33) and **in that** the axis of articulation (43) of the actuating rod (42) is located on the part (35) whereas the axis of articulation (31) for the tensioner (30) is located on the opposite part (34).

8. Machine according to any one of Claims 2 to 7, ***characterized in* that** the rocker arm (32) has a stop (40) for the lever (39).

9. Machine according to Claim 8, ***characterized in* that** the stop (40) is placed on that part (35) of the rocker arm (32) which, with respect to the pivot (33), is the opposite part to the one which carries the tensioner (30).

10. Machine according to any one of the preceding claims, ***characterized in* that** it comprises at least one additional unravelling drum which is parallel to the unravelling drum (15) and rotationally driven off the latter.

11. Machine according to any one of the preceding claims, ***characterized in* that** it comprises a stop device (46) for the drive of the band (18) that moves the products along in the bucket (1), which stop device (46) is located in the area of travel of the lever (39) about the pivot (33).

12. Machine according to Claim 11, ***characterized in* that** the stop device (46) comprises a push-rod (47) which is actuated by the lever (39).
